# DEMANDE DE BREVET EUROPEEN

(11) **EP 4 311 972 A1**
(43) Date de publication de la demande: **31.01.2024**
(21) Numéro de dépôt: 22187891.1
(22) Date de dépôt: 29.07.2022
(51) Int. Cl.: F16L 59/10, F16L 59/16

(54) **DISPOSITIF D'ISOLATION D'AU MOINS UNE PORTION DE TUYAU D'UNE INSTALLATION DE RÉGULATION DE TEMPÉRATURE ET SYSTÈME D'ISOLATION COMPRENANT UN TEL DISPOSITIF**

(71) Demandeur: Alonso, Mickael, 76520 LES-AUTHIEUX-SUR-LE-PORT-SAINT-OUEN (FR)
(72) Inventeur: Alonso, Mickael, 76520 LES-AUTHIEUX-SUR-LE-PORT-SAINT-OUEN (FR)
(74) Mandataire: Fidal Innovation

(57) **Abrégé**

Dispositif (1) d'isolation d'au moins une portion de tuyau d'une installation de régulation de température, le dispositif (1) d'isolation comprenant deux portions (2, 3), chaque portion (2, 3) comprenant une paroi (5) latérale s'étendant suivant une direction longitudinale entre deux parois ( 7, 8, 9) d'extrémités, les deux portions (2, 3) étant articulées de manière à prendre au moins deux positions :
- Une position fermée, de sorte que le dispositif (1) d'isolation forme au moins une partie d'un cylindre creux destiné à enserrer ladite portion de tuyau ;
- Une position ouverte ;
le dispositif (1) d'isolation étant caractérisé en ce qu'il comprend au moins une ouverture (14) de mesure s'étendant longitudinalement sur la paroi (5) latérale de chaque portion (2, 3) de manière à rejoindre chaque paroi (6, 7, 8, 9) d'extrémité.

## Description

### DOMAINE DE L'INVENTION

La présente invention se rapporte au domaine de l'isolation des installations de régulation de température telles que des installations de chauffage de bâtiments, et plus précisément elle se rapporte à un dispositif d'isolation de tuyau d'une telle installation.

### ARRIÈRE-PLAN TECHNOLOGIQUE

Dans un bâtiment, qu'il soit à usage domestique, de bureaux, ou industriel par exemple, il est commun de trouver un ou plusieurs locaux dits techniques dans lesquels une installation de régulation de température du bâtiment en question est située. Une telle installation comprend typiquement un ensemble de tuyaux, point de départ et/ou d'arrivée pour la circulation d'un fluide, typiquement de l'eau, et des systèmes de réglage et/ou de contrôle de la circulation du fluide dans le bâtiment. Ainsi, une telle installation peut comprendre également des vannes et/ou des sondes de mesure de la température sur les tuyaux.

Par ailleurs, afin de limiter les déperditions thermiques dans le local technique, les tuyaux y sont munis d'une isolation thermique. Une telle isolation se présente typiquement sous la forme d'une gaine en matériau isolant thermiquement qui est rapportée sur la surface extérieure des tuyaux de manière à les entourer. Plus la proportion de surface extérieure des tuyaux recouverte d'une telle gaine est importante, meilleure est le résultat de l'isolation.

A certains endroits sur les tuyaux, des formes complexes rendent difficiles l'installation de la gaine d'isolation. Ces endroits sont par exemple les zones en T à la jonction avec les autres tuyaux, le lieu de mise en place d'une vanne, ou encore le lieu de mesure de la température.

Le document WO2018/152564 décrit un exemple d'une solution pour mettre en place une isolation sur une zone en T. Le dispositif comprend deux composants formés chacun d'un matériau isolant et d'un habillage recouvrant l'isolant. Les deux composants sont connectés par une bande adhésive, et sont refermés autour des portions de tuyaux d'une zone en T. Une autre bande adhésive est appliquée pour assurer la jonction des deux composants.

Ainsi, selon cet exemple, le dispositif d'isolation forme une gaine complémentaire de la zone en T, et comprend une portion cylindrique destinée à enserrer deux portions de tuyaux sensiblement alignées, ainsi qu'une portion en saillie sur la portion cylindrique destinée à enserrer une portion de tuyau sensiblement perpendiculaire aux deux portions alignées.

Un tel dispositif est toutefois inadapté dans le cas de formes plus complexes, notamment lors de la mise en place de vannes ou de sondes : un tel dispositif ne s'adapte qu'à la forme circulaire typique des tuyaux.

Le document CA3075574 propose un exemple pour mettre en place une barrière d'isolation autour d'une valve. Selon cet exemple, une poche souple retient un matériau d'isolation et est mise en place sur un tuyau comprenant une poignée de valve, de manière à laisser la poignée à l'extérieur de la poche.

Cette poche est toutefois difficile à installer et à raccorder aux gaines pouvant par ailleurs entourer le tuyau concerné. En effet, le raccord entre la poche et la gaine est source de déperdition thermique. Un raccord spécifique doit alors être mis en place pour limiter les déperditions. En outre, la poche souple est fragile, et peut se déchirer aisément par exemple lors de son installation.

Pour mesurer la température du fluide circulant dans les tuyaux, il est connu d'utiliser un montage dit « en doigt de gant » dans lequel une sonde est insérée à l'intérieur du tuyau en question. Plus précisément, une ouverture est pratiquée sur le tuyau afin de pouvoir y insérée la tige d'une sonde. Une telle solution de mesure de la température implique une modification du tuyau, et la mise en place de moyens d'étanchéité et d'isolation. Le document KR10215411 propose alors un dispositif d'isolation spécifique en deux parties venant enserrer la portion de tuyau autour de l'ouverture, et qui comprend une ouverture par laquelle la sonde est insérée. Une isolation est ainsi maintenue autour de l'ouverture du tuyau et de la sonde.

Une telle solution de mesure de la température s'avère invasive sur l'installation, coûteuse, et source de problèmes notamment liés à l'étanchéité.

Il est par ailleurs connu de mesurer la température du fluide dans les tuyaux à l'aide d'une sonde en contact sur la surface extérieure des tuyaux. Une telle méthode de mesure est moins invasive, et ne provoque aucun problème d'étanchéité. Toutefois, elle créée une zone de forme complexe pour la mise en place d'une isolation. En outre, une telle sonde doit pouvoir être facilement déplacée le long du tuyau, ou encore être retirée puis remise en place aisément. Une isolation prenant en compte une sonde sur la surface extérieure du tuyau doit donc tenir compte du caractère mobile et amovible de la sonde.

Il existe donc un besoin pour un nouveau dispositif d'isolation surmontant notamment les inconvénients précités.

Ainsi, un premier objet de l'invention est de proposer un dispositif d'isolation venant se mettre en place sur une zone de forme complexe d'une portion de tuyau d'une installation de régulation de température.

Un deuxième objet est de proposer un tel dispositif permettant d'assurer l'isolation thermique d'une portion de tuyau sur lequel un dispositif de contrôle, telle qu'une sonde de mesure de la température, est en contact avec la surface extérieure, tout en laissant le dispositif de contrôle accessible à un opérateur.

Un troisième objet est de proposer un tel dispositif qui s'adapte aux dispositifs d'isolation que l'on peut déjà rencontrer sur le reste du tuyau.

Un quatrième objet est de proposer un tel dispositif assurant une isolation thermique optimale sur l'ensemble du tuyau.

Un cinquième objet est de proposer un tel dispositif facile à mettre en place sur un tuyau et à retirer.

Un sixième objet est de proposer un tel dispositif peu coûteux à fabriquer.

### RÉSUMÉ DE L'INVENTION

Ainsi, l'invention se rapporte selon un premier aspect à un dispositif d'isolation d'au moins une portion de tuyau d'une installation de régulation de température. Le dispositif d'isolation comprend deux portions, chaque portion comprenant une paroi latérale s'étendant suivant une direction longitudinale entre deux parois d'extrémités. Les deux portions sont articulées l'une par rapport à l'autre autour d'un axe de liaison longitudinal de manière à prendre au moins deux positions :
- Une position fermée, dans laquelle les parois d'extrémités d'une première portion sont rabattues vers les parois d'extrémité de la deuxième portion de sorte que le dispositif d'isolation forme au moins une partie d'un cylindre creux destiné à enserrer ladite portion de tuyau ;
- Une position ouverte, dans laquelle les parois d'extrémités des deux portions sont écartées l'une de l'autre autour de l'axe de liaison.

Le dispositif d'isolation comprend en outre au moins une ouverture de mesure, ladite ouverture de mesure s'étendant à cheval sur la paroi latérale de chacune des deux portions du dispositif d'isolation, et apte à enserrer ledit dispositif de contrôle lorsque le dispositif d'isolation est en position fermée.

De plus, ladite ouverture de mesure s'étend longitudinalement sur la paroi latérale de chaque portion de manière à rejoindre chaque paroi d'extrémité.

Grâce à ces dispositions notamment, le dispositif d'isolation permet d'assurer une isolation optimale malgré une forme complexe autour d'une portion de tuyau munie d'un dispositif de contrôle, par exemple une sonde de mesure de température ou une vanne. L'extension de l'ouverture de mesure jusqu'aux parois d'extrémité limite le phénomène de pont thermique.

Selon un mode de réalisation, le dispositif peut comprendre en outre un mécanisme de verrouillage en position fermée qui est situé sur au moins un côté du dispositif d'isolation en partie sur une paroi d'extrémité de la première portion et en partie sur une paroi d'extrémité de la deuxième portion. Par exemple, le mécanisme de verrouillage peut être situé sur les parois d'extrémités des deux portions de chaque côté du dispositif d'isolation.

Le dispositif d'isolation est ainsi maintenu efficacement sur la portion de tuyau à isoler et à moindre coût.

Selon un mode de réalisation, le mécanisme de verrouillage comprend au moins un système de coopération par déformation élastique. Le passage de la position ouverte à la position fermée déclenche ainsi automatiquement le mécanisme de verrouillage, sans outil extérieur, facilitant la manipulation par un opérateur.

Selon un mode de réalisation, le dispositif d'isolation peut comprendre un matériau isolant thermiquement retenu entre les deux portions lorsque le dispositif d'isolation est en position fermée. Ledit matériau isolant est destiné à recouvrir au moins en partie ladite portion de tuyau. Il peut ainsi être conformé sur mesure en fonction de la portion de tuyau à isoler et du dispositif de contrôle. Le dispositif d'isolation permet notamment d'assurer le maintien du matériau isolant en position, pour une isolation de grande efficacité.

Selon un mode de réalisation, les deux portions peuvent être articulées par une liaison charnière autour de l'axe de liaison.

Selon un mode de réalisation, le dispositif d'isolation est réalisé en acide polylactique. Il est ainsi peu coûteux et peut être fabriquer par impression 3D, sur mesure.

Selon un mode de réalisation, le dispositif d'isolation peut comprend un système de maintien d'un matériau isolant.

Selon un deuxième aspect, l'invention concerne un système d'isolation d'une installation de régulation de température. L'installation comprend au moins un tuyau pour la circulation d'un fluide et au moins un dispositif de contrôle en contact avec une surface extérieure d'une portion dudit tuyau. Le système comprend au moins un dispositif d'isolation tel que présenté ci-dessus et destiné à enserrer ladite portion du tuyau et le dispositif de contrôle. Le système peut comprendre en outre au moins une gaine d'isolation dudit tuyau située en dehors du dispositif d'isolation et en contact avec le dispositif d'isolation.

Selon un troisième aspect, l'invention concerne un procédé de mise en place du dispositif d'isolation tel que présenté ci-dessus, le procédé comprenant :
- La mise en place d'un dispositif de contrôle en contact avec la surface extérieure d'un tuyau d'une installation de régulation de la température ;
- La mise en place du dispositif d'isolation sur la portion dudit tuyau autour du dispositif de contrôle ;
- Le verrouillage en position fermée du dispositif d'isolation.

Un matériau isolant, par exemple sous forme d'un bloc ou de plusieurs blocs, peut être préalablement placé autour dudit tuyau, les portions du dispositif d'isolation étant rapportés et mise en position fermée ensuite, ou peut être préalablement placé sur les portions du dispositif d'isolation, le dispositif d'isolation étant ensuite placé autour dudit tuyau.

### BRÈVE DESCRIPTION DES DESSINS

Des modes de réalisation de l'invention seront décrits ci-dessous par référence aux dessins, décrits brièvement ci-dessous :
[Fig. 1] représente une vue de trois-quarts suivant un premier côté d'un mode de réalisation d'un dispositif d'isolation conforme à l'invention, dans une position ouverte.
[Fig. 2] représente une vue de trois-quarts suivant un deuxième côté du dispositif de la figure 1.
[Fig. 3] représente une vue de trois-quarts suivant le deuxième côté du dispositif de la figure 2 dans une position fermée.
[Fig. 4] représente une vue de côté du dispositif de la figure 3.
[Fig.5] est un schéma illustrant un système d'isolation d'un tuyau comprenant le dispositif des figures précédentes, en position fermée, mis en place sur une portion d'un tuyau.
[Fig.6] représente une vue tridimensionnelle de trois-quarts, vue de l'intérieur, d'une portion du dispositif d'isolation.
[Fig.7] représente une vue tridimensionnelle similaire à celle de la figure 3, le dispositif d'isolation étant dans une position ouverte et associé à deux blocs de matériau isolant.

Sur les dessins, des références identiques désignent des objets identiques ou similaires.

### DESCRIPTION DÉTAILLÉE

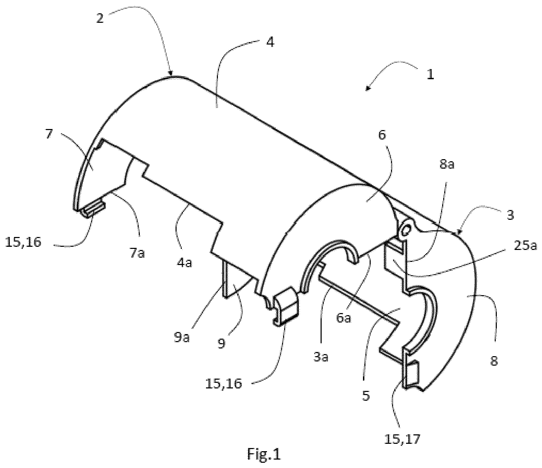

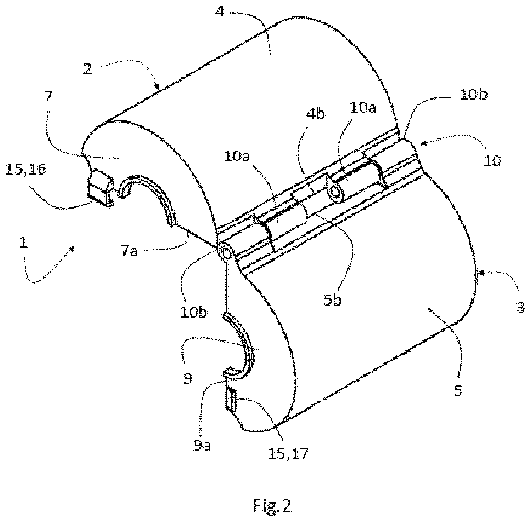

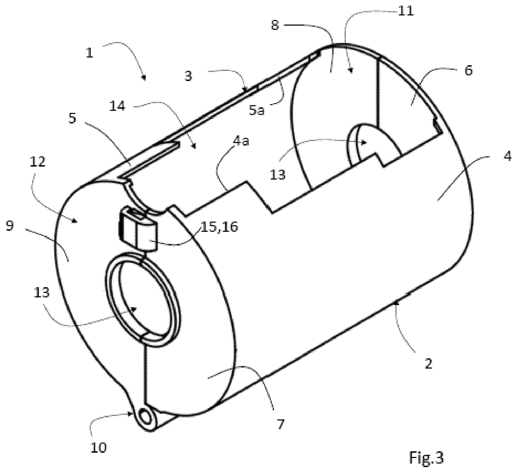

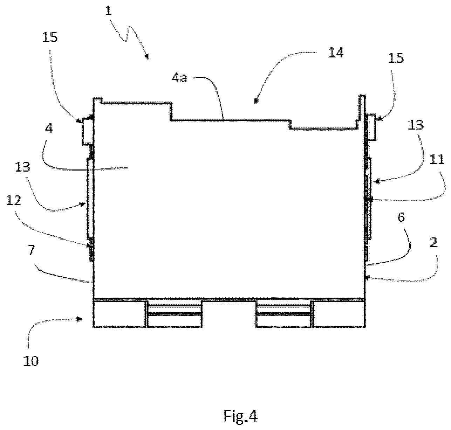

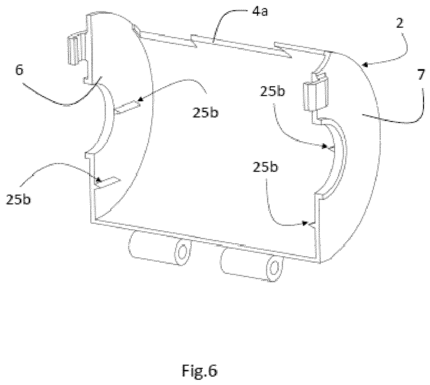

Sur les figures 1 à 7, il est représenté un mode de réalisation d'un dispositif **1** d'isolation destiné à être mis en place sur une portion d'un tuyau. Le dispositif trouve ainsi une application particulière dans les installations de régulation de température telles que celles que l'on peut trouver dans un local technique d'un bâtiment.

Le dispositif 1 d'isolation comprend deux portions **2**, **3**, appelées première portion 2 et deuxième portion 3. Selon le mode de réalisation décrit ici, chaque portions 2, 3 est sensiblement de forme semi-cylindrique à base circulaire, de manière à s'adapter naturellement à la forme commune de la plupart des tuyaux. La longueur, c'est-à-dire la dimension suivant la direction longitudinale, des portions 2, 3 est la même.

Plus précisément, chaque portion respectivement 2, 3, comprend une paroi, respectivement **4**, **5**, latérale s'étendant suivant une direction longitudinale entre deux parois, respectivement **6**, **7** et **8**, **9**, d'extrémité. Les parois 6, 7, 8, 9 d'extrémité sont de forme sensiblement semi-circulaire, de même dimension.

Dans ce qui suit, on définit à des fins de clarté uniquement, une direction longitudinale correspondant à la direction d'extension des génératrices des parois 4, 5 latérales. Les parois 6, 7 et 8, 9 d'extrémités de chaque portion 2, 3 sont alors sensiblement perpendiculaires à la direction longitudinale. On définit suivant la direction longitudinale sur le dispositif 1 un côté avant où se trouvent la paroi 6 d'extrémité avant de la première portion 2 et la paroi 8 d'extrémité avant de la deuxième portion 3, ainsi qu'un côté arrière où se trouvent la paroi 7 d'extrémité arrière de la première portion 2 et la paroi 9 d'extrémité arrière de la deuxième portion 3.

La paroi 4, 5 latérale de chaque portion 2, 3 s'étend radialement entre un premier bord respectivement **4a**, **5a** libre longitudinal et un deuxième bord respectivement **4b**, **5b** libre longitudinal. Les parois 6, 7, 8 et 9 d'extrémités présentent chacune un bord, respectivement **6a**, **7a**, **8a** et **9a** libre, transversal.

Les deux portions 2, 3 sont articulées l'une par rapport à l'autre autour d'un axe de liaison longitudinal. Plus précisément, selon l'exemple présenté, les deux portions 2, 3 sont articulées par une liaison **10** charnière. A cet effet, le deuxième bord 4b longitudinal de la première portion et le deuxième bord 5b longitudinal de la deuxième portion sont chacun munis des deux bagues, respectivement **10a** et **10b**. Les deux bagues 10a du deuxième rebord 4b de la première portion 2 sont alignées longitudinalement de manière à permettre le passage d'une tige formant axe de la liaison 10 charnière. De même, les deux bagues 10b du deuxième rebord 5b de la deuxième portion 3 sont alignées longitudinalement de manière à permettre le passage de la tige formant axe de la liaison 10 charnière. La distance entre les bagues 10a de la première portion 2 et la distance entre les bagues 10b de la deuxième portion 3 sont adaptées de sorte que les bagues 10a, 10b peuvent être alignées pour porter la tige (non représentée) de l'axe de la liaison 10 charnière.

Ainsi, le dispositif 1 peut prendre deux positions par rotation des deux portions 2, 4 autour de la liaison 10 charnière :
- Une position fermée, dans laquelle les parois 6, 7 d'extrémités de la première portion 2 sont rabattues vers les parois 8, 9 d'extrémité de la deuxième portion 3 de sorte que le dispositif 1 d'isolation forme au moins une partie d'un cylindre creux destiné à enserrer la portion de tuyau ;
- Une position ouverte, dans laquelle les parois d'extrémités des deux portions sont écartées l'une de l'autre autour de l'axe de liaison.

Plus précisément, en position ouverte, les bords 6a, 8a des parois 6, 8 d'extrémités du côté avant sont à distance l'un de l'autre, et les bord 7a, 9a des parois 7, 9 d'extrémité arrière sont à distance de même l'un de l'autre. L'angle formé entre les bords 6a, 8a côté avant d'une part et entre les bords 7a, 9a côté arrière d'autre part est par exemple au maximum de 180°, et au minimum de 90° afin de permettre l'introduction d'une portion de tuyau entre les deux portions 2, 3 du dispositif en position ouverte.

En position fermée, les bords 6a, 8a des parois 6, 8 d'extrémités du côté avant forment un angle minimal, de préférence 0°, et sont en contact l'un avec l'autre ; et de même les bords 7a, 9a des parois 7, 9 d'extrémité arrière forment un angle minimal, de préférence 0°, et sont en contact l'un avec l'autre.

Ainsi, en position fermée, les deux portions 2, 3 forment un ensemble de forme cylindrique comprenant une base **11** avant et une base **12** arrière toutes deux sensiblement circulaires, formées respectivement par la jonction des parois 6, 8 d'extrémité avant et des parois 7, 9 d'extrémité arrière.

Afin de permettre à une portion de tuyau de traverser longitudinalement le dispositif 1 en position fermée de part en part, le bord 6a, 7a, 8a, 9a de chaque paroi 6, 7, 8, 9 d'extrémité comprend une découpe respectivement sensiblement semi-circulaire, de sorte que lorsque le dispositif 1 d'isolation est en position fermée, une ouverture **13** de passage de forme sensiblement circulaire est formée dans chacune des bases 11, 12. Les deux ouvertures 13 de passage sont alignées l'une avec l'autre selon un axe longitudinal. Le diamètre des ouvertures 13 de passage est sensiblement égal à celui de la portion de tuyau sur laquelle le dispositif 1 d'isolation est destiné à être mis en place. Eventuellement, le contour des ouvertures 13 de passage peut être muni d'une rondelle en matière souple et déformable élastiquement, par exemple en élastomère, afin de venir en contact sur la portion de tuyau, d'absorber les éventuels jeux dimensionnels sur les tuyaux, et/ou les irrégularités de surface, et assurer ainsi un contact intime avec une surface extérieure du tuyau. Avantageusement, de telles rondelles sont réalisées dans un matériau thermiquement isolant.

Le dispositif 1 d'isolation comprend en outre une ouverture **14** dite de mesure, pour qu'un dispositif de contrôle en contact avec la surface extérieure de la portion de tuyau sur laquelle le dispositif 1 d'isolation est monté puisse demeurer accessible en dehors du dispositif 1 d'isolation. L'ouverture 14 de mesure s'étend à cheval sur la surface 4 latérale de la première portion 2 et la surface 5 latérale de la deuxième portion 3.

Plus précisément, l'ouverture 14 de mesure s'étend longitudinalement sur l'ensemble de la longueur de la paroi 4, 5 latérale de chaque portion 2, 3 du dispositif 1 d'isolation c'est-à-dire qu'elle rejoint les parois 6, 8 d'extrémité avant d'une part et les parois 7, 9 d'extrémité arrière d'autre part. Eventuellement, l'ouverture 14 de mesure peut même s'étendre en partie sur les parois 6, 7, 8, 9 d'extrémités des portions 2, 3.

A cet effet, sur chaque portion 2, 3, la paroi 4, 5 latérale ne décrit pas un angle de 90° autour d'un axe longitudinal, mais décrit un angle inférieur à 90°. Ainsi, en position fermée du dispositif 1 d'isolation, les premiers bords 4a,5a longitudinaux des parois 4, 5 latérales ne se rejoignent pas et ne sont pas en contact l'une avec l'autre. L'écart entre les premiers bords 4a, 5a longitudinaux forme alors l'ouverture 14 de mesure.

La distance entre les premiers bords 4a, 5a longitudinaux lorsque le dispositif 1 d'isolation est en position fermée, ainsi que la forme des premiers bords 4a, 5a longitudinaux sont déterminées de manière à s'adapter au dispositif de contrôle en contact destiné à être en contact avec la surface extérieure de la portion de tuyau concernée.

Par exemple, comme illustré sur les figures, les bords premiers bords 4a, 5a longitudinaux peuvent présenter une forme en escalier, c'est-à-dire par exemple que la distance entre le premier bord 4a de la première portion 2 et le premier bord 5a de la deuxième portion 3 diminue graduellement, en trois paliers depuis le côté avant vers le côté arrière.

La forme des premiers bords longitudinaux peut, en variante, par exemple être rectiligne, ou courbe, ou une combinaison des deux, ou irrégulière.

De préférence, les premiers bords 4a, 5a longitudinaux viennent en contact avec le dispositif de contrôle lorsque le dispositif 1 d'isolation est en position fermée. Eventuellement, les premiers bords 4a, 5a longitudinaux peuvent être munis d'une pièce souple et déformable élastiquement, par exemple en élastomère, et qui vient en contact avec le dispositif de contrôle lorsque le dispositif 1 d'isolation est en position fermée afin d'absorber des éventuels jeux et assurer un contact intime. Avantageusement, ces pièces sont réalisées en un matériau isolant thermiquement.

Le dispositif 1 d'isolation comprend en outre un mécanisme **15** de verrouillage du dispositif 1 d'isolation en position fermée.

Contrairement aux dispositifs venant enserrer des tuyaux de l'art antérieur, les premiers bords longitudinaux 4a, 5a ne sont pas en contact l'un avec l'autre, mais son à distance l'un de l'autre sur l'ensemble de la longueur du dispositif 1 d'isolation, et le dispositif de contrôle est interposé entre eux. Par conséquent, un mécanisme de verrouillage est difficilement mis en place le long des premiers bords 4a, 5a longitudinaux. Ainsi, selon un mode de réalisation de l'invention, le mécanisme 15 de verrouillage est situé au moins d'un côté du dispositif 1 d'isolation, sur les parois 6, 8 d'extrémité avant et/ou sur les parois 7, 9 d'extrémité arrière des portions 2, 3.

De préférence, le mécanisme 15 de verrouillage est réversible, de manière à pouvoir passer le dispositif 1 d'isolation depuis la position fermée en position ouverte.

Selon un exemple, le mécanisme **15** de verrouillage comprend au moins un système **16**, **17** de coopération par déformation élastique formé d'un crochet 16 déformable élastiquement et d'une tablette 17 rigide.

Par déformable élastiquement, on désigne ici la propriété du crochet à se déformer sous une contrainte manuelle par un opérateur, éventuellement à l'aide d'un outil, dans les conditions attendues d'utilisation du dispositif 1 d'isolation, et à reprendre sa forme initiale dès que la contrainte est supprimée. Par rigide, on désigne ici la propriété de la tablette à ne pas se déformer sous l'action de la contrainte qui déforme le crochet.

Selon le mode de réalisation des figures, le mécanisme 15 de verrouillage comprend deux systèmes 16, 17 de coopération par déformation élastique. Plus précisément, un premier système 16, 17 situé du côté avant comprend un crochet 16 sur la paroi 6 d'extrémité avant de la première portion 2 et une tablette 17 sur la paroi 8 d'extrémité avant de la deuxième portion 3. De même, un deuxième système 16, 17 comprend un crochet 16 sur la paroi 7 d'extrémité arrière de la première portion 2 et une tablette 17 sur la paroi 9 d'extrémité arrière de la deuxième portion 3.

Les crochets 16 et les tablettes 17 sont positionnés à proximité des bords 6a, 7a, 8a, 9a des parois 6, 7, 8, 9 d'extrémité correspondantes, de sorte que lorsque le dispositif 1 d'isolation, alors en position ouverte, est amené vers la position fermée par rotation des portions 2, 3 autour de la liaison 10 charnière, alors chaque crochet 16 entre en contact avec une tablette 17, se déforme élastiquement en glissant sur la tablette 17, puis reprend sa forme initiale en agrippant et recouvrant la tablette 17. Le mécanisme 15 de verrouillage est ainsi engagé automatiquement, et la position fermée du dispositif 1 d'isolation est atteinte et verrouillée. Pour mettre le dispositif 1 en position ouverte, les crochets 16 sont soulevés par déformation élastique pour se détacher des tablettes 17, désengageant le mécanisme 15 de verrouillage et autorisant le mouvement entre les portions 2, 3 pour les écarter par rotation autour de la liaison 10 charnière.

Chaque portion 2, 3 est de préférence monobloc. Eventuellement, les rondelles et les pièces en élastomère peuvent être rapportées et fixées par collage. Les portions 2, 3 sont réalisées dans un matériau rigide, c'est-à-dire qu'il ne se déforme dans les conditions prévues de manipulation et d'utilisation. Le matériau utilisé est par exemple l'acide polylactique (PLA), qui permet notamment de fabriquer les portions 2, 3 par une technique de fabrication additive, également appelée impression 3D. Ainsi, les caractéristiques du dispositif 1 d'isolation sont aisément adaptées à la portion de tuyau concernée et au dispositif de contrôle mis en place sur le tuyau. Le dispositif 1 d'isolation peut ainsi être qualifié de sur-mesure. L'épaisseur des parois 3, 4 latérales et 6, 7, 8 et 9 d'extrémité sont de préférence inférieure à 5 mm (millimètres), de préférence encore inférieure à 2,5 mm, et sont par exemple égales à 2 mm. Notamment, l'impression 3D permet de donner aux premiers bords 4a, 5a longitudinaux les caractéristiques requises pour s'adapter au dispositif de contrôle, et d'avoir un dispositif 1 d'isolation de longueur adaptée au dispositif de contrôle, assurant un contact intime entre le dispositif 1 d'isolation et le dispositif de contrôle.

Le dispositif 1 d'isolation peut dès lors être placé en position fermée autour d'une portion de tuyau, et forme un cylindre creux qui peut être rempli au moins en partie d'un matériau **18** isolant autour de la portion de tuyau. De préférence, l'ensemble de l'espace disponible à l'intérieur du dispositif 1 d'isolation autour de la portion de tuyau et du dispositif de contrôle une fois mis en place, est rempli du matériau 18 isolant.

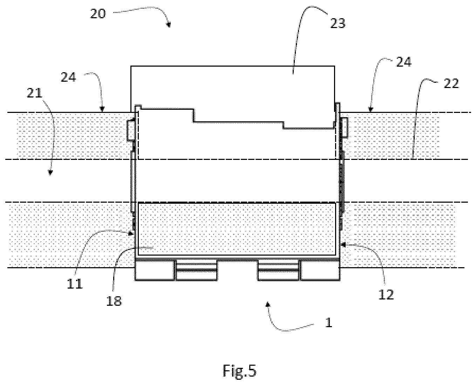

Sur la figure 5, il est représenté un système 20 d'isolation pour une installation de régulation de température. L'installation comprend notamment un tuyau **21** et le dispositif 1 d'isolation mis en place sur une portion dudit tuyau 21. Le diamètre des ouvertures 13 de passage est sensiblement égale au dimère de la portion du tuyau 21 concernée. Ladite portion de tuyau est en contact par sa surface 22 extérieure avec un dispositif **23** de contrôle, par exemple une sonde de température. La longueur du dispositif 1 d'isolation et les dimensions et formes de l'ouverture 14 de mesure sont adaptées au dispositif 23 de contrôle de manière à assurer un contact intime entre le dispositif 1 d'isolation en position fermée et le dispositif 23 de contrôle : le dispositif 23 de contrôle est en contact avec les parois 6, 7, 8 et 9 d'extrémités ainsi qu'avec les premiers bords 4a, 5a longitudinaux. Le système 20 comprend en outre au moins une gaine **24** d'isolation du tuyau 21, et de préférence deux gaines 24 d'isolation, disposées de part et d'autre du dispositif 1 d'isolation sur le tuyau 1. Chaque gaine 24 est réalisée en matériau isolant thermiquement

Plus précisément, une première gaine 24 est placée du côté avant et est en contact avec la base 11 avant du dispositif 1 d'isolation, et une deuxième gaine 24 est placée du côté arrière, et est en contact avec la base 12 arrière du dispositif 1 d'isolation. Ainsi, le nombre de ponts thermiques est réduit, résultant en une diminution des pertes thermiques. En effet, comme l'ouverture 14 de mesure s'étend sur l'ensemble de la longueur du dispositif 1, et vient épouser le contour du dispositif 23 de contrôle, seule l'épaisseur des parois 6, 7, 8, 9 d'extrémités des portions 2, 3 sépare les gaines 24 du dispositif 23 de contrôle. Ainsi, de chaque côté du dispositif 1 d'isolation, d'une part le pont thermique entre une gaine 24 et une base 11, 12 et d'autre part le pont thermique entre une base 11, 12 et le dispositif 23 de contrôle peuvent être considérés comme confondus en un unique pont thermique. La qualité de l'isolation par le système 20 est ainsi améliorée par rapport à l'art antérieur.

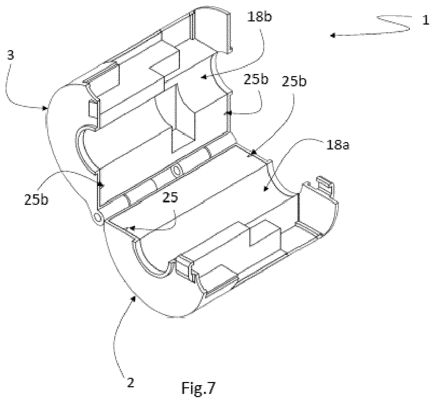

Plus précisément, selon un mode de réalisation, le matériau 18 isolant est formé par un unique bloc, ou par un ensemble de blocs, d'un matériau isolant dont la forme correspond à celle de l'espace à l'intérieur du dispositif 1 d'isolation et dus dispositif 23 de contrôle. Notamment, le matériau isolant peut avantageusement être formé de manière à venir en contact intime à la fois avec la portion de tuyau 21 concernée et/ou avec le dispositif 23 de contrôle. Le matériau est par exemple du polystyrène expansé formé par exemple par découpe ou par impression 3D, sur-mesure. Le bloc, ou les ensembles de blocs, sont préalablement réalisés sur-mesure, en fonction de la géométrie du dispositif 1 d'isolation, de la portion de tuyau 21 concernée et/ou du dispositif 23 de contrôle, afin d'assurer un contact intime. Le ou les blocs ainsi découpés sont positionnés autours de la portion de tuyau et du dispositif 23 de contrôle avant de placer le dispositif 1 d'isolation par-dessus le matériau 18 isolant. Par exemple, dans le cas d'un unique bloc, celui-ci peut comprend une rainure permettant de l'ouvrir par déformation élastique du bloc et de le placer autour de la portion de tuyau 21 concernée. Dans le cas d'un ensemble de bloc, il s'agit par exemple de deux blocs 18a, 18b comme illustré sur la figure 7, chacun correspondant à l'intérieur d'une portion 2, 3 du dispositif 1 d'isolation. Chaque bloc 18a, 18b peut préalablement être placé dans les portions 2, 3 du dispositif 1 d'isolation puis l'ensemble est positionné autour de la portion de tuyau 21 concernée. En variante, les blocs 18a, 18b peuvent d'abord être placé autour de la portion de tuyau 21 concerné et du dispositif 23 de contrôle, puis le dispositif 1 d'isolation est placé en position fermée par-dessus. Une fois le dispositif 1 mis en place en position fermée par-dessus le matériau 18 isolant, ce dernier est enserré et maintenu en position.

Selon un mode de réalisation, le dispositif 1 d'isolation comprend un système de maintien du matériau 18 isolant, afin d'empêcher le matériau 18 isolant de se déplacer par rapport à la portion de tuyau 21 concernée lorsque le dispositif 1 d'isolation est en positon fermée. Selon un mode de réalisation (figure 1), le système de maintien comprend au moins une tablette 25a s'étendant depuis un bord 6a, 7a, 8a, 9a libre transversal des parois 6, 7, 8, 9 d'extrémité, dans une direction sensiblement longitudinale, vers l'intérieur. De préférence, notamment lorsque le matériau isolant 18 est sous forme de deux blocs 18a, 18b, chaque portion 2, 3 est munie d'au moins une tablette 25a. Par exemple, chaque portion 2, 3 comprend une unique tablette 25a, de préférence en saillie sur des parois d'extrémité opposées avant/arrière. Plus précisément, si la première portion 2 comprend une tablette 25a en saillie depuis le bord transversal 7a de la paroi 7 d'extrémité arrière, alors la deuxième portion 3 comprend une tablette 25a en saillie depuis le bord transversal 8a de la paroi 8 d'extrémité avant. En variante, chaque bord 6a, 7a, 8a, 9a libre transversal comprend une tablette 25a du système de maintien. Lorsque le matériau 18 isolant est sous forme de deux blocs 18a, 18b, chaque bloc est alors inséré entre les parois 4, 5 latérales des portions 2, 3 et les tablettes 25a, et est ainsi maintenu avant de placer le dispositif 1 d'isolation autour de la portion de tuyau 21 concernée.

Selon un autre mode de réalisation, le système de maintien du matériau 18 isolant comprend des ailettes **25b** en saillie suivant la direction longitudinale à l'intérieur du dispositif 1 d'isolation à partir de la paroi 6,7 d'extrémité avant et/ou de la paroi 8,9 d'extrémité arrière d'au moins une des deux portions 2, 3, et de préférence des deux portions 2,3. De préférence encore, chaque ailette 25b s'étend suivant une direction transversale, et est sensiblement parallèles aux autres ailettes 25b. Ainsi, une fois le matériau 18 isolant en place, lorsque le dispositif 1 d'isolation est en position fermée et enserre le matériau 18, les ailettes 25b mordent dans le matériau 18 isolant et assurent un blocage du matériau 18 isolant vis-à-vis du dispositif 1 d'isolation, et plus précisément un blocage par collision de la rotation autour de la direction longitudinale et un blocage par friction de la translation suivant les directions transversales. Cette disposition permet notamment de pouvoir placer et maintenir le matériau 18 isolant dans les portions 2, 3 du dispositif 1 d'isolation avant de placer le dispositif 1 d'isolation autour de la portion de tuyau 21 concernée et du dispositif 23 de contrôle. Selon un exemple, chaque ailette 25b présente une épaisseur, c'est-à-dire une dimension suivant la direction longitudinale, d'environ 3mm, et une longueur, c'est-à-dire suivant la dimension suivant la direction d'extension transversale, de 12,5mm environ.

La mise en place du dispositif 1 d'isolation sur le tuyau 21 se fait aisément. En effet, les portions 2, 3 du dispositif 1 d'isolation sont préalablement mises en position ouverte. Le dispositif 23 de contrôle étant installé en contact avec la surface 22 extérieure de la portion du tuyau 21, une portion, par exemple la première portion 2 du dispositif 1 d'isolation, est placée autour de la portion du tuyau 21 et du dispositif 23 de contrôle. Plus précisément, le bord 6a de la paroi 6 d'extrémité avant et le bord 7a de la paroi 7 d'extrémité arrière de la première portion 2 sont appliqués contre la surface 22 extérieure du tuyau, au niveau de leur renfoncement. Le premier bord 4a de la paroi 4 latérale de la première portion est également appliqué contre le dispositif 23 de contrôle. Puis, les positons 2, 3 du dispositif 1 d'isolation sont placées en position fermée, le mécanisme 15 de verrouillage assurant le maintien de la position fermée. Le mécanisme 15 de verrouillage est engagé automatiquement lors du passage en position fermée, et peut impliquer un effort exercer par un opérateur, notamment pour obtenir la déformation du crochet 17 le cas échéant.

Le dispositif 1 d'isolation peut être aisément retiré. A cet effet, le mécanisme 15 de verrouillage est désengagé, par exemple en soulevant légèrement les crochets 17 à l'aide d'un outil de type tournevis plat, autorisant le pivotement des deux portions 2, 3 relativement l'une à l'autre autour de la liaison 10 charnière. Le dispositif 1 d'isolation n'enserre alors plus le tuyau et peut être retiré.

Le dispositif 1 d'isolation forme ainsi en quelque sorte une bague permettant d'assurer efficacement l'isolation sur une portion de tuyau de forme complexe, due à la présence d'un dispositif de contrôle en contact avec la surface extérieure du tuyau, notamment en limitant les pertes dues aux ponts thermiques.

Le dispositif 1 d'isolation peut être fabriqué sur-mesure. Par exemple, à partir d'une prise de mesure de la portion de tuyau 21 concernée et du dispositif 23 de contrôle, un modèle de l'ensemble peut être produit. Il s'agit par exemple d'un modèle numérique 3D. A partir du modèle, le dispositif 1 d'isolation est déterminé, par exemple numériquement, de sorte à épouser la forme et les dimensions de l'ensemble. Le matériau 18 isolant est également déterminé. Le dispositif 1 d'isolation et le matériau 18 isolant peuvent alors être fabriqués, par exemple par une technique d'impression 3D et/ou par découpe.

## Revendications

1. Dispositif (1) d'isolation d'au moins une portion de tuyau (21) d'une installation de régulation de température, le dispositif (1) d'isolation comprenant deux portions (2, 3), chaque portion (2, 3) comprenant une paroi (4, 5) latérale s'étendant suivant une direction longitudinale entre deux parois (6, 7, 8, 9) d'extrémités, les deux portions (2, 3) étant articulées l'une par rapport à l'autre autour d'un axe de liaison longitudinal de manière à prendre au moins deux positions :
- Une position fermée, dans laquelle les parois (6, 7) d'extrémités d'une première portion (2) sont rabattues vers les parois (8, 9) d'extrémité de la deuxième portion (3) de sorte que le dispositif (1) d'isolation forme au moins une partie d'un cylindre creux destiné à enserrer ladite portion de tuyau (21) ;
- Une position ouverte, dans laquelle les parois (6, 7, 8, 9) d'extrémités des deux portions sont écartées l'une de l'autre autour de l'axe de liaison ;
le dispositif (1) d'isolation étant **caractérisé en ce qu'**il comprend au moins une ouverture (14) de mesure, ladite ouverture (14) de mesure s'étendant à cheval sur la paroi (4, 5) latérale de chacune des deux portions (2, 3) du dispositif (1) d'isolation, et apte à enserrer ledit dispositif (23) de contrôle lorsque le dispositif (1) d'isolation est en position fermée,
et **en ce que** ladite ouverture (14) de mesure s'étend longitudinalement sur la paroi (4, 5) latérale de chaque portion (2,3) de manière à rejoindre chaque paroi (6, 7, 8, 9) d'extrémité.

2. Dispositif (1) d'isolation selon la revendication 1, comprenant en outre un mécanisme (15) de verrouillage en position fermée situé sur au moins un côté du dispositif (1) d'isolation en partie sur une paroi (6, 7) d'extrémité de la première portion (2) et en partie sur une paroi (8, 9) d'extrémité de la deuxième portion (3).

3. Dispositif (1) d'isolation selon la revendication 2, dans lequel le mécanisme (15) de verrouillage est situé sur les parois (6, 7, 8, 9) d'extrémités des deux portions (2, 3) de chaque côté du dispositif (1) d'isolation.

4. Dispositif (1) d'isolation selon la revendication 2 ou la revendication 3, dans lequel le mécanisme (15) de verrouillage comprend au moins un système (16, 17) de coopération par déformation élastique.

5. Dispositif (1) d'isolation l'une quelconque des revendications précédentes, comprenant un matériau (18) isolant thermiquement retenu entre les deux portions (2, 3) lorsque le dispositif (1) d'isolation est en position fermée, ledit matériau (18) isolant étant destiné à recouvrir au moins en partie ladite portion de tuyau (21).

6. Dispositif d'isolation selon l'une des revendications précédentes, dans lequel les deux portions (2, 3) sont articulées par une liaison (10) charnière autour de l'axe de liaison.

7. Dispositif (1) d'isolation selon l'une des revendications précédentes, dans lequel le dispositif (1) d'isolation est réalisé en acide polylactique.

8. Dispositif (1) d'isolation selon l'une des revendications précédentes comprenant un système (25a, 25b) de maintien d'un matériau (18) isolant.

9. Système (20) d'isolation d'une installation de régulation de température, ladite installation comprenant au moins un tuyau (21) pour la circulation d'un fluide et au moins un dispositif (23) de contrôle en contact avec une surface (22) extérieure d'une portion dudit tuyau (21), le système (20) comprenant au moins un dispositif (1) d'isolation selon l'une quelconque des revendications précédentes destiné à enserrer ladite portion du tuyau (21) et le dispositif (23) de contrôle, le système (20) comprenant en outre au moins une gaine (24) d'isolation dudit tuyau située en dehors du dispositif (1) d'isolation et en contact avec le dispositif (1) d'isolation.

10. Procédé de mise en place du dispositif (1) d'isolation selon l'une quelconque des revendications 1 à 6, le procédé comprenant :
- La mise en place d'un dispositif (23) de contrôle en contact avec la surface (22) extérieure d'un tuyau (21) d'une installation de régulation de la température ;
- La mise en place du dispositif (1) d'isolation sur la portion dudit tuyau (21) autour du dispositif (23) de contrôle ;
- Le verrouillage en position fermée du dispositif (1) d'isolation.
